**Europäisches Patentamt**

**European Patent Office**

**Office européen des brevets**

(19)

(11) Veröffentlichungsnummer : **0 310 912 B1**

(12) # EUROPÄISCHE PATENTSCHRIFT

(45) Veröffentlichungstag der Patentschrift :
24.07.91 Patentblatt 91/30

(51) Int. Cl.$^5$ : **G01N 30/46**

(21) Anmeldenummer : **88115859.6**

(22) Anmeldetag : **27.09.88**

(54) Vorrichtung zum Verzweigen von Gasströmen.

(30) Priorität : **08.10.87 CH 3948/87**

(43) Veröffentlichungstag der Anmeldung :
**12.04.89 Patentblatt 89/15**

(45) Bekanntmachung des Hinweises auf die
Patenterteilung :
**24.07.91 Patentblatt 91/30**

(84) Benannte Vertragsstaaten :
**AT BE CH DE FR GB IT LI NL**

(56) Entgegenhaltungen :
**DE-A- 1 811 860**
**DE-A- 2 520 075**
**DE-A- 2 840 612**
**GB-A- 826 110**
**US-A- 3 668 834**

(56) Entgegenhaltungen :
**JOURNAL OF CHROMATOGRAPHY, Band 112, 1975, Seiten 205-217, Elsevier Scientific Publishing CO., Amsterdam. NL; G. SCHOMBURG et al.: "Aspects of double-column gas chromatography with glass capillaries involving intermediate trapping"**
**CHROMATOGRAPHIA, Band 1, 1968, Seiten 18-22, D.R. DEANS: "Eine neue Technik des "heart cuttings" in der Gas-Chromatographie"**

(73) Patentinhaber : **L. GIVAUDAN & CIE Société Anonyme**
**CH-1214 Vernier-Genève (CH)**

(72) Erfinder : **Etzweiler, Franz**
**Burstwiesenstrasse 41**
**CH-8606 Greifensee (CH)**

(74) Vertreter : **Urech, Peter, Dr. et al**
**Grenzacherstrasse 124 Postfach 3255**
**CH-4002 Basel (CH)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zum Verzweigen von Gasströmen insbesondere in einer chromatographischen Anlage mit einem an den Ausgang einer Trennsäule angeschlossenen Einlasszweig und zwei von einem Verzweigungspunkt zu nachgeschalteten Anlageteilen führenden Auslasszweigen.

Es sind Gasflussumschalter für die Gaschromatographie bekannt, die im Strömungsweg zwischen zwei oder mehreren chromatographischen Trennsäulen angeordnet sind und wahlweise die Strömung von einer Trennsäule zu einer oder mehreren nachgeschalteten Trennsäule, bzw. zu einem Detektor ermöglichen. Die Umschaltung der Strömungsrichtung erfolgt bei den bekannten Einrichtungen dieser Art durch das Vorhandensein von Hilfsströmungswegen, mit denen in den jeweils zu sperrenden Zweigen ein Ueberdruck aufgebaut wird. Das Prinzip dieser Strömungsumschaltung ist im deutschen Patent 1.811.860 beschrieben. Weitere auf demselben Prinzip beruhende Strömungsumschaltungseinrichtungen sind beispielsweise aus den deutschen Patentschriften Nr. 2.806.123, 2.655.387 und 2.840.612 bekannt.

Ein Hauptzweck all dieser bekannten Einrichtungen ist der, die Umschaltung der Strömungsrichtung zu erreichen, ohne dass der zu steuernde Gasstrom mit Ventilen Kontakt bekommt. Diese Gasströme enthalten nämlich in der Regel Bestandteile, die sich in den Ventilen niederschlagen können. Dies kann einerseits zur Folge haben, dass solche Ventile funktionsunfähig werden und andererseits, dass sich die ursprüngliche Zusammensetzung des Gasstroms verändert und somit die quantitative Bestimmung der im Gasstrom enthaltenen Stoffe verfälscht wird. Einige der vorbekannten Einrichtungen befassen sich zudem mit dem Problem, die durch die Verwendung von Hilfsströmen verhältnismässig komplizierten Ventileinrichtungen zu vereinfachen. Trotzdem haben alle vorbekannten Einrichtungen Nachteile. So werden beispielsweise Verunreinigungen durch die Hilfsströme in das System gebracht. Ein weiterer Nachteil ist der, dass die Strömungsteiler ziemlich kompliziert aufgebaut sind und auch immer noch ein erheblicher Aufwand an Ventilen und Ventilsteuerungen getrieben werden muss.

Der Erfindung liegt die Aufgabe zu Grunde, das Verzweigen von Gasströmen auf wesentlich einfachere Art zu bewerkstelligen.

Erfindungsgemäss wird dies dadurch erreicht, dass bei der eingangs genannten Vorrichtung ein Auslasszweig mit einer Einrichtung, die einen gegenüber dem Druck im anderen Auslasszweig verringerten Druck erzeugt, über ein Absperrventil verbunden ist.

Im folgenden ist anhand der beiliegenden Zeichnung ein Ausführungsbeispiel der Erfindung beschrieben.

Fig. 1 eine schematische Darstellung einer Verzweigungsvorrichtung in einer Schaltstellung.

Fig. 2 : die Verzweigungsvorrichtung in der anderen Schaltstellung.

Fig. 3 : einen Schnitt durch die Ausführungsform der Abfangvorrichtung.

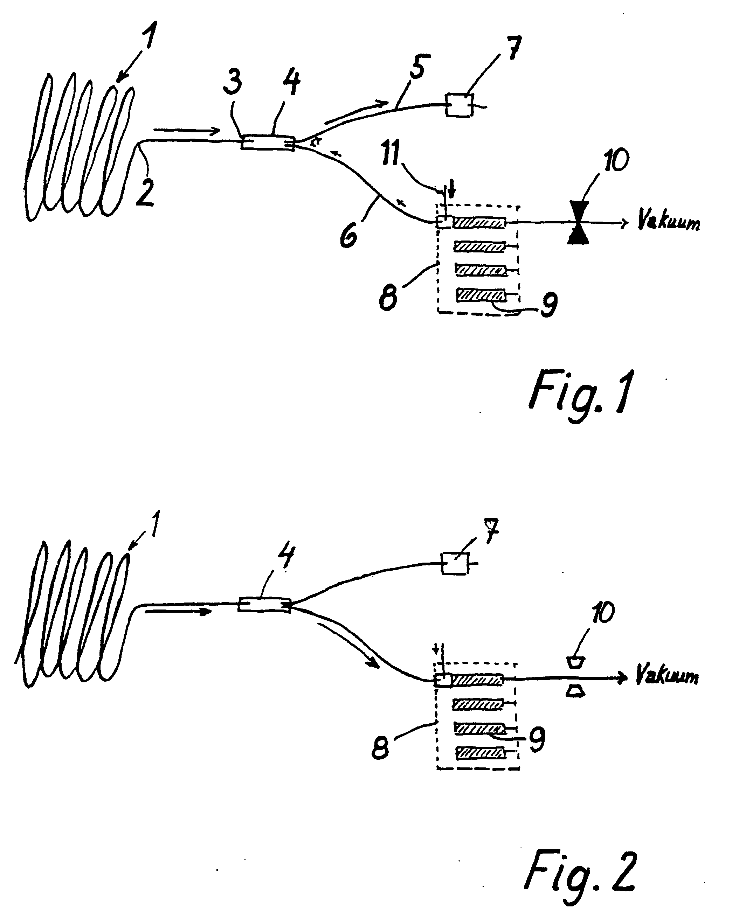

Wie in Figur 1 ersichtlich, besitzt eine gaschromatographische Trennsäule 1 einen Ausang 2, der mit einem Einlasszweig 3 eines Strömungsteilers 4, wie er heute üblicherweise für Kapillarsäulen verwendet wird, verbunden ist.

Der Strömungsteiler besteht aus Glas und einem unter der Handelsbezeichnung "Fused Silica" bekannten Quarzglas. Aus diesen beiden Materialien werden auch die Trennsäulen hergestellt. Dadurch erreicht man die gleiche chemische Inertie, so dass also alle Substanzen, die die Trennsäule unzersetzt auftrennt, die Auffangvorrichtung intakt erreichen. Ferner wird durch die freie Wahl des Querschnittes in den beiden Strömungsarmen jeglicher Trennleistungsverlust verhindert. Der zusätzliche Spülgasstrom unterstützt noch die Strömungsgeschwindigkeit in den Kapillaren, was sich sowohl auf Inertie als auch auf Trennleistung positiv auswirkt.

Der eine Auslasszweig 5 ist mit einem Detektor 7 verbunden, aus dem das Gas unter atmosphärem Druck austritt. Der Detektor dient wie üblich der Beobachtung der im Gasstrom enthaltenen Komponenten.

Der zweite Auslasszweig 6 führt zu einer Abfangvorrichtung 8, die im wesentlichen eine Reihe von Adsorptions- bzw. Absorbtionsröhrchen 9 enthält, die wechselweise in den Gasstrom gebracht werden können. Die Abfangvorrichtung wird im folgenden noch näher beschrieben. Ausgangsseitig ist die Abfangvorrichtung 8 über ein Absperrventil 10 an Vakuum angeschlossen. Das Absperrventil 10 ist ein einfaches Auf/Zu-Ventil, im vorliegenden Fall ein Schlauchquetschventil.

Auf der Eingangsseite der Abfangvorrichtung ist eine Zuführung 11 für Spülgas vorgesehen, die in den Ausgangszweig 6 mündet.

In dem in Figur 1 dargestellten Zustand ist das Ventil 10 geschlossen, d.h. also die Abfangvorrichtung 8 und der Ausgangszweig 6 vom Vakuum getrennt. Infolgedessen kann der von der Trennsäule kommende Gasstrom nicht in den Ausgangszweig 6 gelangen, sondern strömt zum Detektor 7. Zusätzlich wird durch den Spülgaseingang 11 ein schwacher Spülgasstrom in den Ausgangszweig 6 geführt, der zum Strömungsteiler fliesst und sich dort mit dem Hauptstrom vereinigt. Dieser schwache Spülgasstrom verhindert, dass die aus der Säule in Richtung Detektor strömenden Substanzen durch Diffusion in die Abfangvorrichtung gelangen können und dort zu Kontamination des Systems führen.

Wenn eine Substanz, die abgefangen werden soll, d.h. ein sogenannter GC-Peak, das Säulenende erreicht hat, wird die Vorrichtung auf den in Figur 2 gezeigten Zustand umgeschaltet. Dies erfolgt dadurch, dass das Ventil 10 geöffnet wird. Durch das Oeffnen des Ventils entsteht in dem Ausgangszweig 6 gegenüber dem Ausgangszweig 5 ein Unterdruck, der bewirkt, dass der Gasstrom über den Ausgangszweig 6 in die Abfangvorrichtung geleitet wird.

Mit Hilfe des Oeffnungsgrades des Ventils kann ausserdem die Druckdifferenz in den beiden Ausgangszweigen gesteuert werden, sodass der Probenstrom vollständig oder teilweise der Abfangvorrichtung zugeführt werden kann. Es kann also ein Teil des Stroms auch nach Umschaltung weiterhin über den Detektor zur Beobachtung geleitet werden.

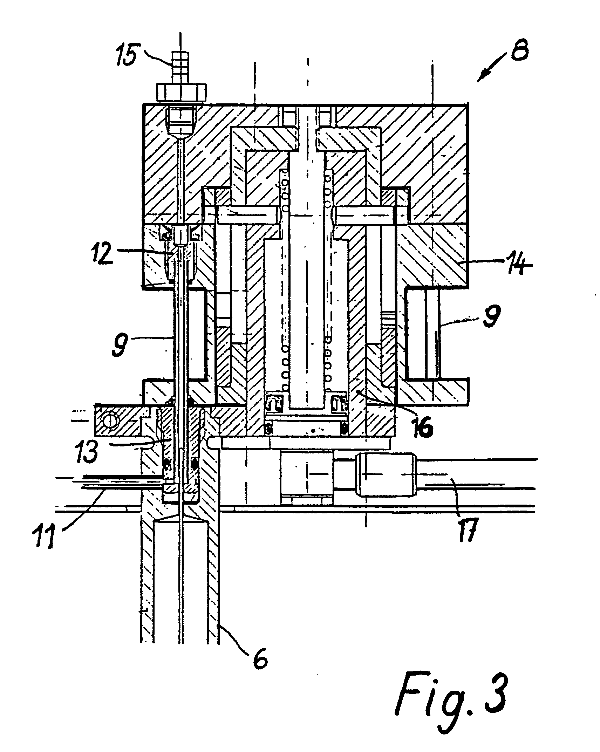

Die Abfangvorrichtung 8 ist in Fig. 3 im Schnitt gezeigt. Sie besteht im wesentlichen aus einer mechanischen Vorrichtung, die die erforderliche Zahl von Adsorptionsröhrchen im vorliegenden Ausführungsbeispiel bis zu 10, in einer entlang einer Zylinderfläche gleichmässig verteilten Anordnung hält und einem Antrieb, um jeweils ein einzelnes gewünschtes Röhrchen in die Strombahn zu bringen. Der Antrieb ist im vorliegenden Ausführungsbeispiel pneumatisch.

Die Röhrchen 9 werden durch geeignete Halterungen 12, 13 in einer Drehtrommel 14 gehalten. Die Drehtrommel hat Ruhepositionen deren Anzahl derjenigen der Röhrchen entspricht. In jeder Ruheposition befindet sich ein Röhrchen im Gasstrom, der von der Verbindungsleitung zum Strömungsteiler d.h. dem Ausgangszweig 6 kommt und über einen Anschluss 15 über das Ventil 10 zum Vakuum führt.

Zum Wechseln der Röhrchen wird durch eine pneumatische Vorrichtung, die einen Kolben 16 und eine Druckluftzuleitung 17 umfasst die Drehtrommel 14 angehoben und so gedreht, dass ein anderes Röhrchen in den Gasstrom kommt. Die genaue Position der Röhrchen wird durch ein mechanisches Rastensystem gewährleistet.

Durch das wechselweise Einbringen der Adsorptionsröhrchen in den Gasstrom wird der Vorteil der Stromverzweigungsvorrichtung ohne Ventilkombinationen und ohne Hilfsströme zum Umsteuern der Strömungsrichtungen voll genutzt.

Wie das Ausführungsbeispiel zeigt, ist die erfindungsgemässe Vorrichtung wesentlich einfacher aufgebaut als bekannte Vorrichtungen zum gleichen Zweck. Insbesondere kann ein sehr einfach konstruierter Strömungsteiler eingesetzt werden. Dies wirkt sich positiv sowohl auf die Herstellungskosten, als auch auf die Zuverlässigkeit im Betrieb aus.

## Patentansprüche

1. Vorrichtung zum Verzweigen von Gasströmen, insbesondere in einer gaschromatographischen Anlage, mit einem an den Ausgang einer Trennsäule (1) angeschlossenen Einlasszweig(3) und zwei von einem Verzweigungspunkt zu nachgeschalteten Anlageteilen führenden Auslasszweigen (5, 6), dadurch gekennzeichnet, dass ein erster Auslasszweig (6) mit einer Einrichtung, die einen gegenüber dem Druck im anderen Auslasszweig (5) verringerten Druck erzeugt, über ein Absperrventil (10) verbunden ist.

2. Vorrichtung nach Anspruch 1, dadurch gekennzeichnet, dass in dem ersten Auslasszweig (6) eine Spülgaszuführung (11) angeordnet ist.

3. Vorrichtung nach Anspruch 1, dadurch gekennzeichnet, dass im ersten Auslasszweig (6) zwischen dem Verzweigungspunkt und dem Ventil (10) eine Abfangvorrichtung (8) vorhanden ist.

4. Vorrichtung nach Anspruch 3, dadurch gekennzeichnet, dass die Abfangvorrichtung (8) eine Anzahl von wechselweise in den Strömungsweg einzuschaltende Adsorptionsröhrchen (9) enthält.

## Claims

1. A device for branching gas flows, especially in a gas chromatography plant, having an inlet branch (3) connected to the output of a separating column (1) and two outlet branches (5, 6) which extend from a junction to subsequent parts of the plant, characterized in that a first outlet branch (6) is connected by way of a shutoff valve (10) to means producing a pressure lower than the pressure in the other outlet branch (5).

2. A device according to claim 1, characterized in that a scavenging gas feed (11) is disposed in the first outlet branch (6).

3. A device according to claim 1, characterized in that an interceptor (8) is present in the first outlet branch (6) between the junction and the valve (10).

4. A device according to claim 3, characterized in that the interceptor (8) comprises a number of adsorption tubes connected alternately into the flow path.

## Revendications

1. Appareil pour ramifier des courants gazeux, notamment dans une installation de chromatographie en phase gazeuse, comprenant une branche d'entrée (3) raccordée à la sortie d'une colonne de fractionnement (1), et deux branches de sortie (5, 6) qui mènent d'un point de ramification à des parties de l'installation situées en aval, caractérisé en ce qu'une première branche de sortie (6) est reliée, par l'intermédiaire d'une vanne d'arrêt (10), à un dispositif qui produit une pression réduite comparativement à la pression régnant dans l'autre branche de sortie (5).

2. Appareil selon la revendication 1, caractérisé en ce qu'une arrivée de gaz de balayage (11) est agencée dans la première branche de sortie (6).

3. Appareil selon la revendication 1, caractérisé en ce qu'un dispositif collecteur (8) est prévu dans la première branche de sortie, entre le point de ramification et la vanne (10).

4. Appareil selon la revendication 3, caractérisé en ce que le dispositif collecteur (8) comprend un certain nombre de tubes d'absorption (9) qui peuvent être intercalés alternativement dans le trajet d'écoulement.

Fig.1

Fig.2

*Fig.3*